# EUROPÄISCHE PATENTSCHRIFT

(11) **EP 3 856 483 B1**
(45) Veröffentlichungstag und Bekanntmachung des Hinweises auf die Patenterteilung: **23.11.2022**
(21) Anmeldenummer: 19782952.6
(22) Anmeldetag: 27.09.2019
(51) Int. Cl.: B29C 49/48, B29C 49/58, B29C 49/06, B29C 49/36, B29C 49/56, B29L 31/00

(54) **VORRICHTUNG UND VERFAHREN ZUM UMFORMEN VON KUNSTSTOFFVORFORMLINGEN ZU KUNSTSTOFFBEHÄLTNISSEN MIT BELASTUNGSAUSGLEICH FÜR MEDIENVERBINDUNGEN**
DEVICE AND METHOD FOR RESHAPING PLASTIC PREFORMS INTO PLASTIC CONTAINERS WITH LOAD COMPENSATION FOR MEDIA CONNECTIONS
DISPOSITIF ET PROCÉDÉ POUR MOULER DES ÉBAUCHES EN MATIÈRE PLASTIQUE EN RÉCIPIENTS EN MATIÈRE PLASTIQUE, COMPRENANT UN ÉQUILIBRAGE DE CONTRAINTES POUR DES LIAISONS DE TRANSPORT DE MATIÈRE

(30) Priorität: 27.09.2018 DE 102018123876
(43) Veröffentlichungstag der Anmeldung: 04.08.2021
(73) Patentinhaber: Krones AG, 93073 Neutraubling (DE)
(72) Erfinder: BUESS, Armin, 93073 Neutraubling (DE)
(74) Vertreter: Bittner, Bernhard
(86) Internationale Anmeldenummer: PCT/EP2019/076197
(87) Internationale Veröffentlichungsnummer: WO 2020/065018

(56) Entgegenhaltungen:
- DE-A1-102013 113 361
- DE-U1-202015 101 602
- US-A1- 2011 298 162
- US-B2- 9 061 458

## Beschreibung

Die vorliegende Erfindung bezieht sich auf eine Vorrichtung und ein Verfahren zum Umformen von Kunststoffvorformlingen zu Kunststoffbehältnissen. Derartige Vorrichtungen und Verfahren sind aus dem Stand der Technik seit langem bekannt. Dabei werden üblicherweise erwärmte Kunststoffvorformlinge innerhalb von Blasformen zu Kunststoffbehältnissen, wie insbesondere Kunststoffflaschen expandiert. Dies kann dabei mit gasförmigen Medien, wie insbesondere Druckluft, geschehen, neuerdings sind jedoch auch Verfahren bekannt geworden, bei denen diese Expansion unmittelbar mit einem flüssigen Medium und insbesondere mit einem beispielsweise abzufüllenden Getränk erfolgt. Die vorliegende Erfindung ist auf beide Ausgestaltungen gerichtet. Solche Vorrichtungen und Verfahren aus dem Stand der Technik sind in den Dokumente US2011/298162A1, DE202015101602U1 beschrieben.

Üblicherweise weisen derartige Umformungsstationen Blasformträger auf, an denen mittelbar oder unmittelbar Blasformteile angeordnet sind. Teilweise ist es erforderlich, diese Blasformteile oder andere Bestandteile der Umformungsstationen wie etwa Blasformträgerschalen oder auch die Blasformträger selbst zu versorgen, beispielsweise mit elektrischer Energie, aber auch insbesondere mit Temperiermedien. Zu diesem Zweck werden üblicherweise Kabel und Leitungen eingesetzt. Beim Öffnen und Schließen dieser Blasformen werden die Blasformträger üblicherweise geschwenkt. So kann es zu erhöhten Belastungen dieser Leitungsverbindungen kommen, was insofern nachteilig ist, da diese Verbindungen oft teuer sind und daher relativ schnell ausgewechselt werden.

Insbesondere zur Temperierung des Formträgers oder der Blasformteile einer solchen Blas- oder Umformungsstation werden diese von einem Temperiermedium durchflossen. Aufgrund der erforderlichen Bewegung des Formträgers muss daher dieser über eine flexible Schlauchleitung mit dem Temperiermedium versorgt werden. Nach dem heutigen Stand der Technik werden diese Schlauchleitungen an der einen Seite fest eingebaut, das heißt eine Seite des Schlauchs wird an einem Verteiler angeschlossen und die andere Seite an dem beweglichen Formträger.

Wie oben erwähnt kommt es damit bei einer Öffnungs- und Schließbewegung zu Torsionen und dergleichen dieser Schläuche und damit zu einer hohen Belastung.

Der vorliegenden Erfindung liegt daher weiterhin die Aufgabe zugrunde, derartige Belastungen zu reduzieren und insbesondere auf diese Weise die Lebensdauer derartiger Verbindungsleitungen zu erhöhen. Diese Aufgaben werden erfindungsgemäß durch die Gegenstände der unabhängigen Patentansprüche erreicht.

Vorteilhafte Ausführungsformen und Weiterbildungen sind Gegenstand der Unteransprüche.

Eine erfindungsgemäße Vorrichtung zum Umformen von Kunststoffvorformlingen zu Kunststoffbehältnissen weist eine Umformungseinheit mit einem ersten Seitenteilträger und einem zweiten Seitenteilträger auf. Dabei ist an dem ersten Seitenteilträger ein erstes Seitenteil einer Blasform zumindest mittelbar befestigbar und an dem zweiten Seitenteilträger ist ein zweites Seitenteil einer Blasform zumindest mittelbar befestigbar, wobei diese Seitenteile in einem geschlossenen Zustand der Blasform wenigstens einen Teil des Hohlraums ausbilden, innerhalb dessen der Kunststoffvorformling durch Beaufschlagung mit einem fließfähigen Medium zu dem Kunststoffbehältnis umformbar ist und wobei die Umformungseinrichtung an einem Hauptträger angeordnet ist, an dem wenigstens ein Seitenteilträger bewegbar gegenüber dem anderen Seitenteilträger zum Öffnen und/oder Schließen der Blasform angeordnet ist.

Dabei weist die Umformungseinrichtung wenigstens eine Versorgungseinrichtung mit wenigstens einer ersten Verbindungsleitung auf, wobei wenigstens ein Abschnitt wenigstens einer Verbindungsleitung mittels einer Befestigungseinrichtung stationär gegenüber dem Hauptträger angeordnet ist und wobei ein Abschnitt dieser Verbindungsleitung an einer Einrichtung der Umformungseinheit angeordnet ist, derart, dass sich bei einer Bewegung des Seitenteilträgers gegenüber dem Hauptträger dieser Abschnitt der Verbindungsleitung gegenüber der Befestigungseinrichtung bewegt.

Erfindungsgemäß weist die Vorrichtung ein Stellglied auf, an dem wenigstens ein Abschnitt und insbesondere ein weiterer Abschnitt der Verbindungsleitung befestigt ist, wobei dieses Stellglied ebenfalls gegenüber dem Hauptträger bewegbar ist.

Insbesondere ist dieser weitere Abschnitt der Verbindungsleitung von demjenigen Abschnitt, der an der Einrichtung der Umformungseinrichtung angeordnet ist und/oder demjenigen Abschnitt, der an der Befestigungseinrichtung angeordnet ist, beabstandet. Insbesondere ist dieser Abschnitt zwischen dem Abschnitt, der an der Einrichtung der Umformungseinrichtung angeordnet ist und demjenigen Abschnitt, der an der Befestigungseinrichtung angeordnet ist

Bei einer weiteren vorteilhaften Ausführungsform weist die Blasform auch ein Bodenteil auf. Besonders bevorzugt bilden die beiden Seitenteile gemeinsam mit diesem Bodenteil den Hohlraum zum Expandieren der Kunststoffvorformlinge zu den Kunststoffbehältnissen aus. Dabei kann weiterhin auch eine Vorrichtung vorgesehen sein, welche zum Schließen der Blasform das Bodenteil an diese zustellt.

Die Erfindung schlägt daher vor, dass eine Entlastung dieser Verbindungsleitung dadurch vorgenommen wird, dass ein Abschnitt, an dem die Verbindungsleitung befestigt ist, (insbesondere gekoppelt an die Bewegung der Seitenteilträger) ebenfalls bewegt wird, um so ein übermäßiges Verdrillen oder Verbiegen der Verbindungsleitung zu verhindern.

Bei einer weiteren vorteilhaften Ausführungsform weist die Vorrichtung einen stangenartigen Körper und insbesondere einer Reckstange auf, welche zum Dehnen der Kunststoffvorformlinge in diese einführbar ist.

Bei einer weiteren vorteilhaften Ausführungsform weist die Vorrichtung auch eine Beaufschlagungseinrichtung auf, welche den Kunststoffvorformling mit dem fließfähigen Medium beaufschlagt. Wie oben erwähnt, kann dabei diese Beaufschlagungseinrichtung etwa eine sogenannte Blasdüse sein, welche an einem Mündungsrand der Kunststoffvorformlinge anlegbar ist und diese mit dem fließfähigen Medium beaufschlagt. Dabei kann diese Beaufschlagungseinrichtung die Kunststoffvorformlinge sowohl mit einem gasförmigen Medium beaufschlagen, als auch mit einem flüssigen Medium und insbesondere einem abzufüllenden Getränk.

Bei einer weiteren vorteilhaften Ausführungsform ist es möglich, dass die Seitenteile der Blasformeinrichtung unmittelbar an den Seitenteilträgern angeordnet sind, es wäre jedoch auch möglich, dass noch weitere Elemente vorgesehen sind. So können beispielsweise an den Seitenteilträgern Blasformschalen angeordnet sein und an diesen Blasformschalen wiederum die Blasformseitenteile.

Bei einer weiteren bevorzugten Ausführungsform ist die Bewegung des wenigstens einen Seitenteilträgers eine Schwenkbewegung und insbesondere eine Schwenkbewegung bezüglich einer Achse, welche parallel ist zu der Längsrichtung des umzuformenden Kunststoffvorformlings. Besonders bevorzugt wird auch der zweite Seitenteilträger geschwenkt. Dabei kann es sich um einen symmetrischen Schwenkvorgang handeln, sodass die beiden Seitenteilträger gleichermaßen und auch mit der gleichen Geschwindigkeit geschwenkt werden.

Unter einer Anordnung der Verbindungsleitung an wenigstens einer Einrichtung der Umformungseinheit wird verstanden, dass diese beispielsweise an dem Seitenteilträger angeordnet werden kann. Zu diesem Zweck kann die Leitungseinrichtung entsprechende Kupplungseinrichtungen aufweisen. Es wäre jedoch auch möglich, dass sich die Verbindungsleitung abschnittsweise durch den Seitenteilträger hindurch erstreckt, um innerhalb der Seitenteilträgers angeordnete Elemente, wie insbesondere die Seitenteile der Blasform unmittelbar zu versorgen, etwa mit dem Temperiermedium zu temperieren.

Bei einer weiteren vorteilhaften Ausführungsform handelt es sich bei demjenigen Abschnitt, der an der Einrichtung der Umformungseinheit angeordnet ist, um einen Endabschnitt der Verbindungsleitung.

Unter einer Versorgung der Umformungsstation wird insbesondere die Versorgung der Umformungsstation mit einem fließfähigen, beispielsweise flüssigen Medium verstanden. Es könnte sich jedoch auch um die Versorgung der Umformungsstation mit elektrischer Energie handeln, beispielsweise wenn die Blasformteile elektrisch temperiert, beispielsweise erwärmt werden.

Es wird daher vorgeschlagen, dass die im Stand der Technik an einem unbeweglichen Verteiler angeschlossenen Leitungsstücke nur an einem Verteiler angeschlossen werden, der insbesondere mit den Seitenteilträgern gekoppelt ist, wobei sich dieser Verteiler, im Folgenden als Stellglied bezeichnet -bevorzugt synchron- mit der Öffnungs- und Schließbewegung des Formträgers bewegt. Dieses Stellglied, bzw. dieser Verteilerklotz wird bevorzugt mit einem zusätzlichen Schlauch versorgt. Dies ist unten genauer erläutert.

Besonders bevorzugt ist die Bewegung des Stellglieds an die Bewegung wenigstens eines Seitenteilträgers und bevorzugt beider Seitenteilträger gekoppelt.

Bei einer weiteren bevorzugten Ausführungsform ist ein Antrieb zum Öffnen und Schließen der Blasform vorgesehen. Dieser kann beispielsweise ein elektrischer Antrieb oder auch ein pneumatischer oder hydraulischer Antrieb sein, es wäre jedoch auch denkbar und bevorzugt, dass zum Durchführen der Öffnungs- und Schließbewegung Führungskurven verwendet werden.

Bei einer weiteren vorteilhaften Ausführungsform handelt es sich bei der Verbindungsleitung um eine Medienleitung und insbesondere um eine Flüssigkeitsleitung. Besonders bevorzugt dienen diese Medienleitungen zum Leiten eines flüssigen oder gasförmigen Mediums, beispielsweise Wasser oder Öl. Insbesondere dient die Versorgungseinrichtung zum Temperieren von Elementen der Umformungseinrichtung und insbesondere von den Blasformseitenteilen.

Bevorzugt handelt es sich bei den Medienleitungen um Schläuche.

Bei einer weiteren vorteilhaften Ausführungsform handelt es sich bei wenigstens einer Verbindungsleitung um eine flexible Verbindungsleitung. Bevorzugt mündet dabei ein Endabschnitt dieser Verbindungsleitung in den Seitenteilträgern der Blasform.

Bei einer weiteren vorteilhaften Ausführungsform ist eine Bewegung des Stellglieds gegenüber dem Hauptträger an eine Bewegung wenigstens eines Seitenteilträgers gegenüber dem Hauptträger gekoppelt. Dabei erfolgt insbesondere eine mechanische Kopplung. So kann beispielsweise durch eine Bewegung des Seitenteilträgers auch ein Schlitten in Bewegung gesetzt werden, der wiederum das Stellglied trägt.

Auf diese Weise wird die komplexe und ungünstige Bewegung der Schläuche auf wenigstens zwei Abschnitte aufgeteilt.

Bei einer weiteren bevorzugten Ausführungsform ist die Bewegung des Stellglieds derart an die Bewegung des Seitenteilträgers gekoppelt, dass diese Bewegung einer Abstandsänderung zwischen dem Seitenteilträger und dem Stellglied entgegenwirkt. Insbesondere handelt es sich dabei um eine Abstandsänderung zwischen den Endabschnitten der jeweiligen Verbindungsleitung.

Bei einer weiteren vorteilhaften Ausführungsform weist wenigstens eine Verbindungsleitung einen ersten Verbindungsleitungsabschnitt auf und wenigstens einen zweiten Verbindungsleitungsabschnitt auf, wobei der erste Verbindungsleitungsabschnitt und der zweite Verbindungsleitungsabschnitt miteinander in Strömungsverbindung stehen. Dabei ist es möglich, dass diese Verbindungsleitungsabschnitte miteinander gekoppelt sind, beispielsweise über Kopplungen. Besonders bevorzugt wird jedoch diese Strömungsverbindung durch das Stellglied hergestellt.

Bei einer bevorzugten Ausführungsform ist das Stellglied in einer geradlinigen Richtung bewegbar. Bevorzugt wird dabei, wie unten genauer erläutert wird, ein Schlitten vorgesehen, der das Stellglied trägt bzw. der mechanisch mit diesem gekoppelt ist. Dabei ist es möglich, dass das Stellglied von der gleichen Antriebseinrichtung bewegt wird, welche auch eine Bewegung der Seitenteilträger bewirkt.

Besonders bevorzugt kann diese geradlinige Bewegung im Wesentlichen auch senkrecht zu einer Achse des Kunststoffvorformlings sein. Es wäre jedoch auch möglich, dass die Bewegung schräg gegenüber der Achse des Kunststoffvorformlings ist, beispielsweise gegenüber einer senkrechten Richtung bezüglich der Längsrichtung des Kunststoffvorformlings, um weniger als 30°, bevorzugt um weniger als 20° und bevorzugt um weniger als 10° geneigt ist.

Bei einer weiteren vorteilhaften Ausführungsform sind die Blasformträgerteile symmetrisch bewegbar.

Bei einer weiteren vorteilhaften Ausführungsform ist das Stellglied in einer Symmetrieebene bewegbar, die in einem geschlossenen Zustand der Blasform durch die beiden aneinander liegenden Seitenteile der Blasform gebildet wird. Auf diese Weise kann für beide Blasformträgerteile eine gleichwertige Entlastung erreicht werden. Durch die Verwendung von mehreren Verbindungsabschnitten der Leitungsverbindungen wird die komplexe und ungünstige Schlauchbewegung des ursprünglichen Schlauches auf zwei Schläuche aufgeteilt. Diese Schläuche müssen dann eine erheblich kleinere Bewegung vollziehen. Dabei handelt es sich jedoch nur noch um eine sehr leichte Bewegung und Torsionen können bevorzugt vollständig vermieden werden.

Der Schlauch bzw. die Schläuche können dadurch aus einem deutlich günstigeren Schlauchmaterial gefertigt werden. Auf diese Weise kann auch eine Kosteneinsparung bei den Verbindungsleitungen erreicht werden. Insgesamt wird hier trotz der Erhöhung der Anzahl der Schläuche ein Kostenvorteil erreicht.

Bei einer weiteren vorteilhaften Ausführungsform ist das Stellglied auch als Flüssigkeitsverteileinrichtung ausgebildet. So kann das Stellglied einen Verteilraum aufweisen, der beispielsweise die Flüssigkeit von einem zuführenden Leitungsabschnitt auf zwei abführende Leitungsabschnitte verteilt. Dies gilt insbesondere für den Vorlauf einer Temperierung für die Blasformen. Entsprechend kann für den Rücklauf das Stellglied auch als Verteilereinrichtung bzw. als Sammeleinrichtung wirken, welche den Rückstrom von zwei zweiten Leitungsabschnitten sammelt und einen ersten Leitungsabschnitt zuführt.

Die vorliegende Erfindung ist weiterhin auf eine Anordnung zum Umformen von Kunststoffvorformlingen zu Kunststoffbehältnissen mit einem bewegbaren und insbesondere drehbaren Zentralträger gerichtet, an dem eine Vielzahl von Vorrichtungen der oben beschriebenen Ansprüche befestigt ist. Insbesondere handelt es sich dabei um eine Anordnung vom Rundläufertyp.

Bei einer bevorzugten Ausführungsform weist die Anordnung eine Zuführeinrichtung und insbesondere einen Zuführstern auf, um die Kunststoffvorformlinge an die jeweiligen Umformungsstationen zuzuführen. Bei einer weiteren vorteilhaften Ausführungsform weist die Anordnung auch eine Abführeinrichtung und insbesondere einen Abführstern auf, um die gefertigten und insbesondere geblasenen und/ oder bereits gefüllten Behältnisse von den Umformungsstationen abzuführen.

Die vorliegende Erfindung ist weiterhin auf ein Verfahren zum Umformen von Kunststoffvorformlingen zu Kunststoffbehältnissen mittels einer Umformungseinheit gerichtet, welche einen ersten Seitenteilträger und einen zweiten Seitenteilträger aufweist, wobei an dem ersten Seitenteilträger ein erstes Seitenteil einer Blasform zumindest mittelbar befestigt ist bzw. befestigt wird und an dem zweiten Seitenteilträger ein zweites Seitenteil der Blasform wenigstens mittelbar befestigt ist bzw. befestigt wird und wobei diese Seitenteile in einem geschlossenen Zustand der Blasform wenigstens einen Teil eines Hohlraums ausbilden, innerhalb dessen der Kunststoffvorformling durch Beaufschlagung mit einem fließfähigen Medium zu dem Kunststoffbehältnis umgeformt wird und wobei die Umformungseinheit an einem Hauptträger angeordnet ist, an dem wenigstens ein Seitenteilträger gegenüber dem anderen Seitenteilträger zum Öffnen und/oder Schließen der Blasform bewegt wird, wobei wenigstens ein Element der Umformungseinheit mittels einer Versorgungseinrichtung versorgt wird und welche wenigstens eine erste Verbindungsleitung aufweist, wobei wenigstens ein Abschnitt wenigstens einer Verbindungsleitung mittels wenigstens einer Befestigungseinrichtung stationär gegenüber dem Hauptträger angeordnet wird und wobei ein Abschnitt dieser Verbindungsleitung an einer Einrichtung der Umformungseinheit angeordnet wird, derart, dass sich bei einer Bewegung des Seitenteilträgers gegenüber dem Hauptträger dieser Abschnitt der Verbindungsleitung gegenüber der Befestigungseinrichtung und/oder dem Hauptträger bewegt.

Erfindungsgemäß weist die Vorrichtung ein Stellglied auf, an dem wenigstens ein Abschnitt der Verbindungsleitung befestigt ist, wobei sich dieses Stellglied beim Öffnen und/oder Schließen der Blasform ebenfalls gegenüber dem Hauptträger bewegt.

Es wird daher auch verfahrensseitig eine Vorgehensweise vorgeschlagen, welche letztlich zur Entlastung der jeweiligen Verbindungsleitungen, insbesondere Schläuche, führt.

Bevorzugt werden die Kunststoffvorformlinge mittels eines fließfähigen Mediums und insbesondere mittels Luft und/oder einer Flüssigkeit expandiert.

Weitere Vorteile und Ausführungsformen ergeben sich aus den beigefügten Zeichnungen.

Darin zeigen:
- Fig. 1a: Eine Darstellung einer Umformungsstation nach dem internen Stand der Technik der Anmelderin in einem geschlossenen Zustand;
- Fig. 1b: Die Umformungseinrichtung aus Fig. 1a in einem geöffneten Zustand;
- Fig. 2a: Eine Darstellung einer erfindungsgemäßen Umformungseinrichtung in einem geschlossenen Zustand der Blasform bzw. Umformungseinheit;
- Fig.2b: Die Vorrichtung aus Figur 2a in einem geöffneten Zustand der Blasform bzw. Umformungseinheit;
- Fig. 3a: Eine Seitenansicht der Umformungseinrichtung in einem geschlossenen Zustand der Blasform;
- Fig. 3b: Eine Seitenansicht der Umformungseinrichtung in einem geöffneten Zustand der Blasform;
- Fig. 4a: Eine Ansicht von unten auf eine erfindungsgemäße Umformungseinrichtung in einem geschlossenen Zustand der Blasform;
- Fig. 4b: Die Darstellung aus Fig. 4a in einem geöffneten Zustand der Blasform; und
- Fig. 5: Eine schematische Darstellung einer Anordnung zum Umformen von Kunststoffvorformlingen zu Kunststoffbehältnissen.

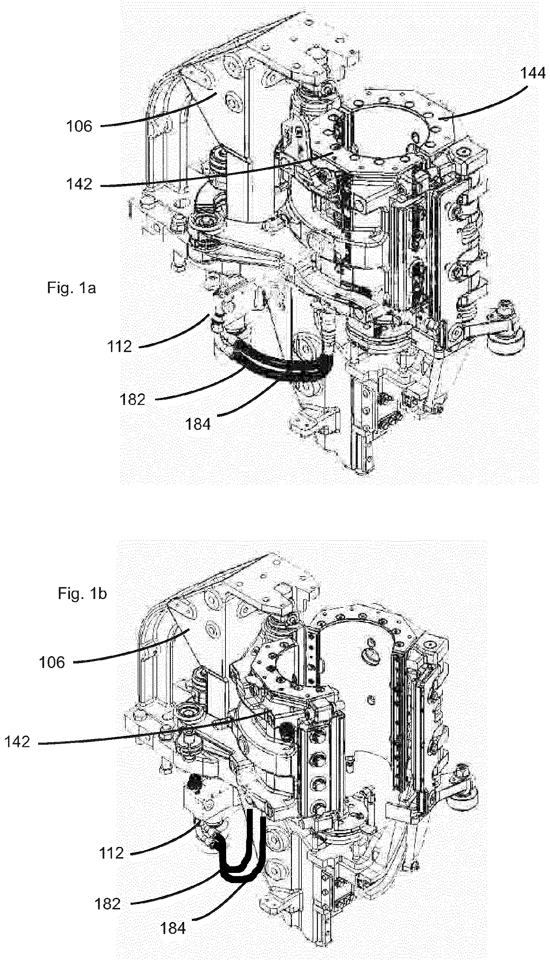

Figur 1a zeigt eine Umformungseinrichtung nach dem internen Stand der Technik der Anmelderin in einem geschlossenen Zustand. Diese weist einen ersten Seitenteilträger 142 und einen zweiten Seitenteilträger 144 auf. Diese beiden Seitenteilträger 142 und 144 sind schwenkbar gegenüber einem Hauptträger 106 angeordnet. Das Bezugszeichen 112 kennzeichnet eine Befestigungseinrichtung, mittels der zwei Schlauchleitungen 182 und 184 an dem Hauptträger befestigt sind. Die zweiten Enden dieser Schlauchleitungen münden hier in einem Bereich des Seitenteilträgers 142.

Figur 1b zeigt die in Figur 1a gezeigte Umformungseinrichtung in einem geöffneten Zustand. Man erkennt, dass hier die Seitenteilträger deutlich mehr an die Befestigungseinrichtung 112 heranrücken und auf diese Weise die Schlauchleitungen 182, 184 deutlich stärker gekrümmt und damit deutlich stärker belastet werden.

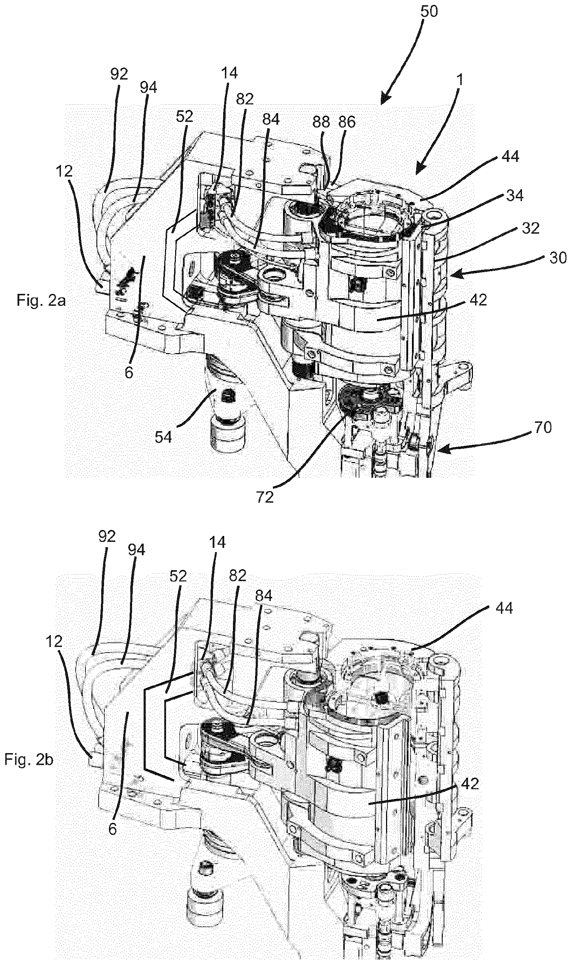

Figur 2a zeigt eine erfindungsgemäße Umformungseinrichtung in einem geschlossenen Zustand. Dabei bezieht sich das Bezugszeichen 42 auf einen ersten Seitenteilträger und das Bezugszeichen 44 auf einen zweiten Seitenteilträger. Diese Seitenteilträger können mittels einer Welle zum Öffnen und Schließen der (nicht gezeigten) Blasform geschwenkt werden. Das Bezugszeichen 30 kennzeichnet eine Verriegelungseinrichtung, mittels derer die Seitenteilträger verriegelt werden können.

Das Bezugszeichen 72 kennzeichnet einen Bodenteilträger, mittels dessen ein (nicht gezeigtes) Bodenteil ebenfalls an die beiden Seitenteile herangeführt werden kann, um so die Blasform zu schließen. Das Bezugszeichen 70 kennzeichnet einen Kopplungsmechanismus, mittels dessen die Bewegung des Bodenteilträgers 72 an die Bewegung der Seitenteilträger gekoppelt ist.

Das Bezugszeichen 54 kennzeichnet eine Antriebseinrichtung, hier eine Kurvenrolle, mittels der (mit Führungskurven) ein Öffnen und Schließen der Blasformen erreicht werden kann.

Das Bezugszeichen 12 kennzeichnet eine Befestigungseinrichtung, die an dem Hauptträger 6 angeordnet ist. Ausgehend von dieser Befestigungseinrichtung führen zwei erste Verbindungsleitungsabschnitte 92 und 94 zu einem Stellglied 14. Ausgehend von diesem Stellglied 14 führen wiederum zwei Verbindungsleitungsabschnitte 82 und 84 weiter zu dem Blasformträgerteil 42 und zwei weitere Verbindungsleitungsabschnitte 86 und 88 zu dem zweiten Seitenteilträger 44. Das Bezugszeichen 1 kennzeichnet die Umformungseinrichtung und das Bezugszeichen 50 die Umformungsvorrichtung.

Figur 2b zeigt die in Figur 1 gezeigte Umformungseinrichtung in einem geöffneten Zustand. Man erkennt, dass hier die Verbindungsleitungsabschnitte 82 und 84 nicht wesentlich mehr gekrümmt sind als bei der in Figur 2a gezeigten Situation, da sich auch das Stellglied 14 mit der Öffnungsbewegung hier im Vergleich zur Figur 2 nach hinten bewegt hat.

Das Bezugszeichen 52 kennzeichnet einen Stellgliedträger, der wiederum an einem Schlitten angeordnet ist, dessen Bewegung mechanisch mit der Führungsrolle gekoppelt ist.

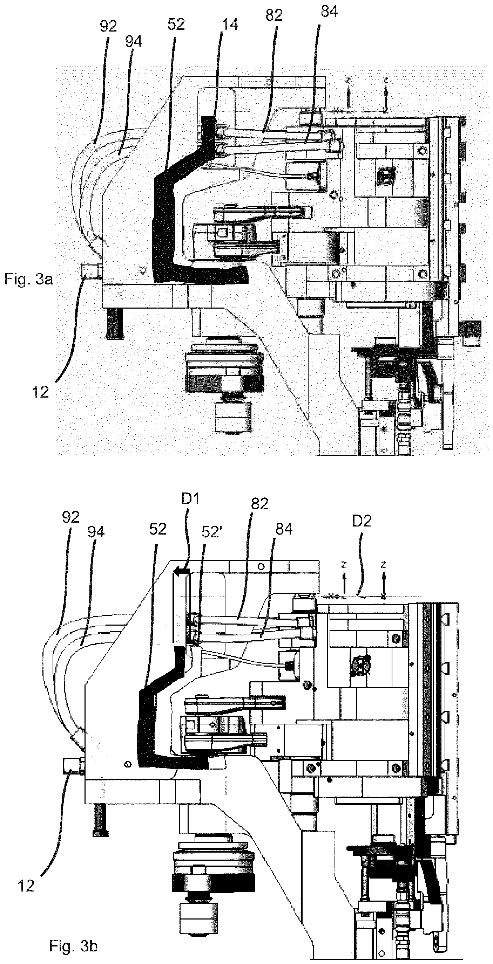

Die Figuren 3a und 3b zeigen eine Seitenansicht der in den Figuren 2a und 2b gezeigten Umformungseinrichtung. In dieser Darstellung ist insbesondere der Schlitten 52 gezeigt, der (vgl. Figur 3) in zwei unterschiedlichen Positionen angeordnet ist. An diesem Schlitten ist wie oben erwähnt auch das Stellglied 14 angeordnet. Das Bezugszeichen 52' kennzeichnet entsprechend die Position des Trägers 52 in der in Figur 3a gezeigten Situation.

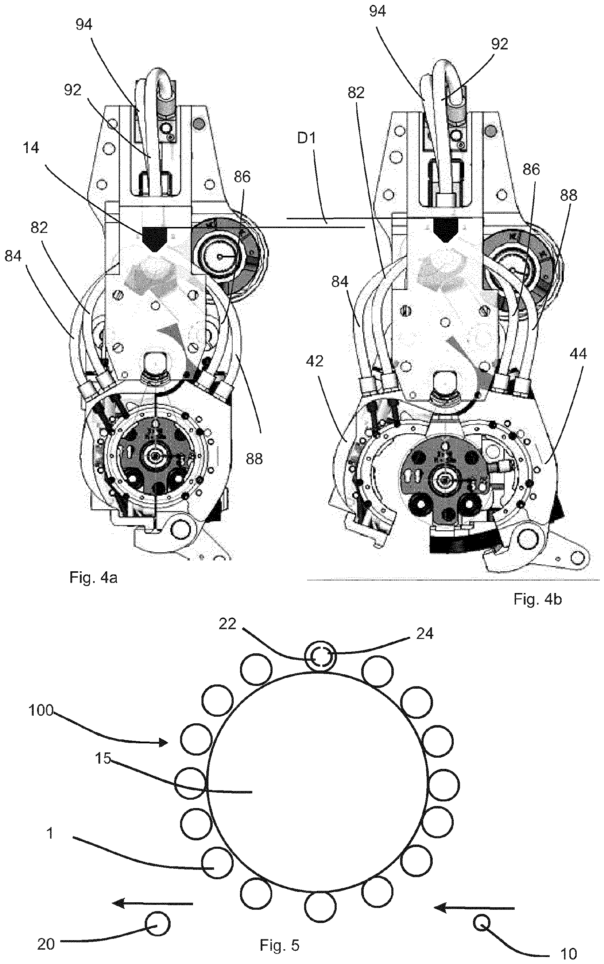

Die Figuren 4a und 4b zeigen eine Draufsicht auf die erfindungsgemäßen Umformungseinrichtung. Hier ist insbesondere auch wieder der Abstand D1 erkennbar, entlang dessen das Stellglied 14 bewegt wird.

Wie oben erwähnt, dient das Stellglied auch zum Verteilen von Flüssigkeiten auf die beiden Seitenteilträger 42 und 44. Entsprechend weist das Stellglied 14 in seinem Inneren einen Hohlraum auf, in dem Flüssigkeit gesammelt und/oder verteilt werden kann.

Figur 5 zeigt eine schematische Darstellung einer erfindungsgemäßen Anordnung zum Umformen von Kunststoffvorformlingen 10 zu Kunststoffbehältnissen 20. Diese weist einen Stationsträger 15 auf, an dem eine Vielzahl von Umformungsstationen 1 und insbesondere erfindungsgemäßen Umformungsstationen 1 angeordnet ist. Die Bezugszeichen 22 und 24 kennzeichnen grob schematisch die Seitenteile einer Blasform 2.

### Bezugszeichenliste

- 1: Umformungseinrichtung
- 2: Blasform
- 6: Hauptträger
- 10: Kunststoffvorformlinge
- 12: Befestigungseinrichtung
- 14: Stellglied
- 15: Stationsträger
- 20: Kunststoffbehältnisse
- 22: Seitenteil einer Blasform
- 24: Seitenteil einer Blasform
- 30: Verriegelungseinrichtung
- 42: Blasformträgerteil
- 42: erster Seitenteilträger
- 44: zweiter Seitenteilträger
- 50: Umformungsstation
- 52: Stellgliedträger, Schlitten
- 52': Position des Trägers
- 53: Führungsrolle
- 54: Antriebseinrichtung
- 70: Kopplungsmechanismus
- 72: Seitenteil einer Blasform
- 82: Leitungsabschnitt
- 84: Leitungsabschnitt
- 86: Verbindungsleitungsabschnitt
- 88: Verbindungsleitungsabschnitt
- 92: erster Leitungsabschnitt
- 94: erster Leitungsabschnitt
- 106: Hauptträger (Stand der Technik)
- 112: Befestigungseinrichtung (Stand der Technik)
- 142: erster Seitenteilträger (Stand der Technik)
- 144: zweiter Seitenteilträger (Stand der Technik)
- 182: Schlauchleitung (Stand der Technik)
- 184: Schlauchleitung (Stand der Technik)

## Patentansprüche

1. Vorrichtung (50) zum Umformen von Kunststoffvorformlingen (10) zu Kunststoffbehältnissen (20) mit einer Umformungseinrichtung (1) mit einem ersten Seitenteilträger (42) und einem zweiten Seitenteilträger (44), wobei an dem ersten Seitenteilträger (42) ein erstes Seitenteil (22) einer Blasform (2) zumindest mittelbar befestigbar ist und an dem zweiten Seitenteilträger (44) ein zweites Seitenteil (24) der Blasform (2) wenigstens mittelbar befestigbar ist, wobei diese Seitenteile (22, 24) in einem geschlossenen Zustand der Blasform (2) wenigstens einen Teil eines Hohlraums ausbilden, innerhalb dieser der Kunststoffvorformling (10) durch Beaufschlagung mit einem fließfähigen Medium zu dem Kunststoffbehältnis (20) umformbar ist, und wobei die Umformungseinrichtung (1) an einem Hauptträger (6) angeordnet ist, an dem wenigstens ein Seitenteilträger (42) bewegbar gegenüber dem anderen Seitenteilträger (44) zum Öffnen und/oder Schließen der Blasform (2) angeordnet ist, wobei die Umformungseinrichtung (1) wenigstens eine Versorgungseinrichtung (8) mit wenigstens einer ersten Verbindungsleitung (82, 84, 86, 88, 92, 94) aufweist, wobei wenigstens ein Abschnitt wenigstens einer Verbindungsleitung (82, 84, 86, 88, 92, 94) mittels wenigstens einer Befestigungseinrichtung (12) stationär gegenüber dem Hauptträger (6) angeordnet ist und wobei ein Abschnitt dieser Verbindungsleitung (82, 84, 86, 88, 92, 94) an einer Einrichtung der Umformungseinrichtung (1) angeordnet ist, derart, dass sich bei einer Bewegung des Seitenteilträgers (42, 44) gegenüber dem Hauptträger (6) dieser Abschnitt der Verbindungsleitung (82, 84, 86, 88, 92, 94) gegenüber der Befestigungseinrichtung (14) bewegt,
**dadurch gekennzeichnet, dass**
an der Vorrichtung (50) ein Stellglied (14) angeordnet ist, an dem wenigstens ein Abschnitt der Verbindungsleitung (82, 84, 86, 88, 92, 94) befestigt ist, wobei dieses Stellglied (14) ebenfalls gegenüber dem Hauptträger (6) bewegbar ist.

2. Vorrichtung (50) nach Anspruch 1,
**dadurch gekennzeichnet, dass**
es sich bei der Verbindungsleitung (82, 84, 86, 88, 92, 94) um eine Medienleitung handelt.

3. Vorrichtung (50) nach wenigstens einem der vorangegangenen Ansprüche,
**dadurch gekennzeichnet, dass**
die wenigstens eine Verbindungsleitung (82, 84, 86, 88, 92, 94) eine flexible Verbindungsleitung (82, 84, 86, 88, 92, 94) ist.

4. Vorrichtung (50) nach wenigstens einem der vorangegangenen Ansprüche,
**dadurch gekennzeichnet, dass**
eine Bewegung des Stellglieds (14) gegenüber dem Hauptträger (6) an eine Bewegung wenigstens eines Seitenteilträgers (42, 44) gegenüber dem Hauptträger (6) gekoppelt ist.

5. Vorrichtung (50) nach dem vorangegangenen Anspruch,
**dadurch gekennzeichnet, dass**
die Bewegung des Stellglieds (14) derart an die Bewegung des Seitenteilträgers (42, 44) gekoppelt ist, dass diese Bewegung einer Abstandsänderung zwischen dem Seitenteilträger und dem Stellglied entgegenwirkt.

6. Vorrichtung (50) nach wenigstens einem der vorangegangenen Ansprüche,
**dadurch gekennzeichnet, dass**
wenigstens eine Verbindungsleitung einen ersten Verbindungsleitungsabschnitt (92, 94) und einen zweiten Verbindungsleitungsabschnitt (82, 84, 86, 88) aufweist, wobei der erste Verbindungsleitungsabschnitt und der zweite Verbindungsleitungsabschnitt miteinander in Strömungsverbindung stehen.

7. Vorrichtung (50) nach wenigstens einem der vorangegangenen Ansprüche,
**dadurch gekennzeichnet, dass**
das Stellglied in einer geradlinigen Richtung bewegbar ist und / oder das Stellglied in einer Symmetrieebene bewegbar ist.

8. Vorrichtung (50) nach wenigstens einem der vorangegangenen Ansprüche,
**dadurch gekennzeichnet, dass**
das Stellglied auch als Flüssigkeitsverteileinrichtung (14) ausgebildet ist.

9. Anordnung (100) zum Umformen von Kunststoffvorformlingen (10) zu Kunststoffbehältnissen (20) mit einem bewegbaren und insbesondere drehbaren Zentralträger (18), an dem eine Vielzahl von Vorrichtungen (50) nach wenigstens einem der vorangegangenen Ansprüche befestigt ist.

10. Verfahren zum Umformen von Kunststoffvorformlingen (10) zu Kunststoffbehältnissen (20) mittels einer Umformungseinrichtung (1) mit einem ersten Seitenteilträger (42) und einem zweiten Seitenteilträger (44), wobei an dem ersten Seitenteilträger (42) ein erstes Seitenteil (22) einer Blasform (2) zumindest mittelbar befestigt ist und an dem zweiten Seitenteilträger (44) ein zweites Seitenteil (24) der Blasform (2) wenigstens mittelbar befestigt ist, wobei diese Seitenteile (22, 24) in einem geschlossenen Zustand der Blasform (2) wenigstens einen Teil eines Hohlraums ausbilden, innerhalb dessen der Kunststoffvorformling (10) durch Beaufschlagung mit einem fließfähigen Medium zu dem Kunststoffbehältnis (20) umgeformt wird, und wobei die Umformungseinrichtung (1) an einem Hauptträger (6) angeordnet ist, an dem wenigstens ein Seitenteilträger (42) gegenüber dem anderen Seitenteilträger (44) zum Öffnen und/oder Schließen der Blasform (2) bewegt wird, wobei wenigstens ein Element der Umformungseinrichtung (1) mittels einer Versorgungseinrichtung (8) versorgt wird, welche wenigstens eine erste Verbindungsleitung (82, 84, 86, 88, 92, 94) aufweist, wobei wenigstens ein Abschnitt wenigstens einer Verbindungsleitung (82, 84, 86, 88, 92, 94) mittels wenigstens einer Befestigungseinrichtung (12) stationär gegenüber dem Hauptträger (6) angeordnet wird und wobei ein Abschnitt dieser Verbindungsleitung (82, 84, 86, 88, 92, 94) an einer Einrichtung der Umformungseinrichtung (1) angeordnet wird, derart, dass sich bei einer Bewegung des Seitenteilträgers (42, 44) gegenüber dem Hauptträger (6) dieser Abschnitt der Verbindungsleitung (82, 84, 86, 88, 92, 94) gegenüber der Befestigungseinrichtung (14) und/oder dem Hauptträger bewegt,
**dadurch gekennzeichnet, dass**
die Vorrichtung (50) ein Stellglied (14) aufweist, an dem wenigstens ein Abschnitt der Verbindungsleitung (82, 84, 86, 88, 92, 94) befestigt ist, wobei sich dieses Stellglied (14) beim Öffnen und/oder Schließen der Blasform ebenfalls gegenüber dem Hauptträger (6) bewegt.

## Claims

1. Apparatus (50) for forming plastic preforms (10) into plastic containers (20), having a forming device (1) with a first side part carrier (42) and a second side part carrier (44), wherein a first side part (22) of a blow mould (2) is fastened at least indirectly at the first side part carrier (42) and a second side part (24) of the blow mould (2) is fastened at least indirectly at the second side-part carrier (44), wherein these side parts (22, 24) in a closed state of the blow mould (2) form at least a part of a cavity within which the plastic preform (10) can be formed into the plastic container (20) by the application of a flowable medium, and wherein the forming device (1) is arranged on a main carrier (6), on which at least one side part carrier (42) is arranged movably relative to the other side part carrier (44) for opening and/or closing the blow mould (2), wherein the forming device (1) has at least one supply device (8) with at least one first connecting line (82, 84, 86, 88, 92, 94), wherein at least one section of at least one connecting line (82, 84, 86, 88, 92, 94) is arranged stationary with respect to the main carrier (6) by means of at least one fastening device (12) and wherein a section of this connecting line (82, 84, 86, 88, 92, 94) being arranged on a device of the forming device (1) in such a way that, in the event of a movement of the side part carrier (42, 44) with respect to the main carrier (6), this section of the connecting line (82, 84, 86, 88, 92, 94) moves with respect to the fastening device (14), **characterized in that**
an actuator (14) is arranged on the apparatus (50), to which at least one section of the connecting line (82, 84, 86, 88, 92, 94) is fastened, wherein this actuator (14) also being movable relative to the main carrier (6).

2. Apparatus (50) according to claim 1,
**characterized in that**
the connection line (82, 84, 86, 88, 92, 94) is a media line.

3. Apparatus (50) according to at least one of the preceding claims, **characterized in that**
the at least one connection line (82, 84, 86, 88, 92, 94) is a flexible connection line (82, 84, 86, 88, 92, 94).

4. Apparatus (50) according to at least one of the preceding claims, **characterized in that**
a movement of the actuator (14) relative to the main carrier (6) is coupled to a movement of at least one side part carrier (42, 44) relative to the main carrier (6).

5. Apparatus (50) according to the preceding claim,
**characterized in that**
the movement of the actuator (14) is coupled to the movement of the side part carrier (42, 44) in such a way that this movement counteracts a change in distance between the side part carrier and the actuator.

6. Apparatus (50) according to at least one of the preceding claims, **characterized in that**
at least one connecting line comprises a first connecting line section (92, 94) and a second connecting line section (82, 84, 86, 88), wherein the first connecting line section and the second connecting line section being in flow communication with each other.

7. Apparatus (50) according to at least one of the preceding claims, **characterized in that**
the actuator is movable in a rectilinear direction and / or the actuator is moveable in a plane of symmetry.

8. Apparatus (50) according to at least one of the preceding claims, **characterized in that**
the actuator is also designed as a liquid distribution device (14).

9. Arrangement (100) for forming plastic preforms (10) into plastic containers (20), having a movable and, in particular, rotatable central carrier (18) to which a plurality of apparatus (50) according to at least one of the preceding claims is attached.

10. Method for forming plastic preforms (10) into plastic containers (20) by means of a forming device (1) with a first side part carrier (42) and a second side part carrier (44), wherein a first side part (22) of a blow mould (2) is at least indirectly fastened to the first side part carrier (42) and a second side part (24) of the blow mould (2) is at least indirectly fastened to the second side part carrier (44), wherein these side parts (22, 24) form at least part of a cavity in a closed state of the blow mould (2) within which the plastic preform (10) is formed into the plastic container (20) by being acted upon by a flowable medium, and wherein the forming device (1) is arranged on a main carrier (6) on which at least one side-part carrier (42) is moved relative to the other side-part carrier (44) in order to open and/or close the blow mould (2), wherein at least one element of the forming device (1) being supplied by means of a supply device (8) which has at least one first connecting line (82, 84, 86, 88, 92, 94), wherein at least a section of at least one connecting line (82, 84, 86, 88, 92, 94) is arranged in a stationary manner with respect to the main carrier (6) by means of at least one fastening device (12), and wherein a section of this connecting line (82, 84, 86, 88, 92, 94) is arranged on a device of the forming device (1) in such a way that, when the side part carrier (42) is moved relative to the main carrier (6), this section of the connecting line (82, 84, 86, 88, 92, 94) moves relative to the fastening device (14) and/or the main carrier,
**characterized in that**
the apparatus (50) has an actuator (14) to which at least one section of the connecting line (82, 84, 86, 88, 92, 94) is fastened, wherein this actuator (14) likewise moves relative to the main carrier (6) when the blow mould is opened and/or closed.

## Revendications

1. Dispositif (50) de façonnage de préformes en matière plastique (10) en des récipients en matière plastique (20), avec un système de façonnage (1) avec un premier support de partie latérale (42) et un deuxième support de partie latérale (44), dans lequel une première partie latérale (22) d'un moule de soufflage (2) peut être fixée au moins indirectement sur le premier support de partie latérale (42) et une deuxième partie latérale (24) du moule de soufflage (2) peut être fixée au moins indirectement sur le deuxième support de partie latérale (44), dans lequel lesdites parties latérales (22, 24) réalisent, dans un état fermé du moule de soufflage (2), au moins une partie d'une cavité, à l'intérieur de laquelle la préforme en matière plastique (10) peut être façonnée en le récipient en matière plastique (20) en le soumettant à l'action d'un milieu pouvant s'écouler et dans lequel le système de façonnage (1) est disposé sur un support principal (6), sur lequel au moins un support de partie latérale (42) est disposé de manière à pouvoir être déplacé par rapport à l'autre support de partie latérale (44) pour ouvrir et/ou fermer le moule de soufflage (2), dans lequel le système de façonnage (1) présente au moins un système d'alimentation (8) avec au moins une première conduite de raccordement (82, 84, 86, 88, 92, 94), dans lequel au moins un tronçon d'au moins une conduite de liaison (82, 84, 86, 88, 92, 94) est disposé de manière stationnaire par rapport au support principal (6) au moyen d'au moins un système de fixation (12) et dans lequel un tronçon de ladite conduite de raccordement (82, 84, 86, 88, 92, 94) est disposé sur un système du système de façonnage (1) de telle manière que ledit tronçon de la conduite de raccordement (82, 84, 86, 88, 92, 94) se déplace par rapport au système de déplacement (14) lors d'un déplacement du support de partie latérale (42, 44) par rapport au support principal (6), **caractérisé en ce que**
est disposé sur le dispositif (50) un organe de réglage (14), sur lequel au moins un tronçon de la conduite de raccordement (82, 84, 86, 88, 92, 94) est fixé, dans lequel ledit organe de réglage (14) peut être déplacé également par rapport au support principal (6).

2. Dispositif (50) selon la revendication 1,
**caractérisé en ce que**
la conduite de raccordement (82, 84, 86, 88, 92, 94) est une conduite de milieux.

3. Dispositif (50) selon au moins l'une quelconque des revendications précédentes,
**caractérisé en ce que**
l'au moins une conduite de raccordement (82, 84, 86, 88, 92, 94) est une conduite de raccordement (82, 84, 86, 88, 92, 94) flexible.

4. Dispositif (50) selon au moins l'une quelconque des revendications précédentes,
**caractérisé en ce que**
un déplacement de l'organe de réglage (14) par rapport au support principal (6) est couplé à un déplacement d'au moins un support de partie latérale (42, 44) par rapport au support principal (6).

5. Dispositif (50) selon la revendication précédente,
**caractérisé en ce que**
le déplacement de l'organe de réglage (14) est couplé de telle manière au déplacement du support de partie latérale (42, 44) que ledit déplacement contrecarre une modification de distance entre le support de partie latérale et l'organe de réglage.

6. Dispositif (50) selon au moins l'une quelconque des revendications précédentes,
**caractérisé en ce que**
au moins une conduite de raccordement présente un premier tronçon de conduite de raccordement (92, 94) et un deuxième tronçon de conduite de raccordement (82, 84, 86, 88), dans lequel le premier tronçon de conduite de raccordement et le deuxième tronçon de conduite de raccordement sont en communication fluidique l'un avec l'autre.

7. Dispositif (50) selon au moins l'une quelconque des revendications précédentes,
**caractérisé en ce que**
l'organe de réglage peut être déplacé dans une direction rectiligne et / ou l'organe de réglage peut être déplacé dans un plan de symétrie.

8. Dispositif (50) selon au moins l'une quelconque des revendications précédentes,
**caractérisé en ce que**
l'organe de réglage est réalisé également en tant que système de répartition de liquide (14).

9. Ensemble (100) pour façonner des préformes en matière plastique (10) en des récipients en matière plastique (20) avec un support central (18) pouvant être déplacé et en particulier pouvant être tourné, sur lequel une pluralité de dispositifs (50) selon au moins l'une quelconque des revendications précédentes est fixée.

10. Procédé pour façonner des préformes en matière plastique (10) en des récipients en matière plastique (20) au moyen d'un système de façonnage (1) avec un premier support de partie latérale (42) et un deuxième support de partie latérale (44), dans lequel une première partie latérale (22) d'un moule de soufflage (2) est fixée au moins indirectement sur le premier support de partie latérale (42) et une deuxième partie latérale (24) du moule de soufflage (2) est fixée au moins indirectement sur le deuxième support de partie latérale (44), dans lequel lesdites parties latérales (22, 24) réalisent, dans un état fermé du moule de soufflage (2), au moins une partie d'une cavité, à l'intérieur de laquelle la préforme en matière plastique (10) est façonnée en le récipient en matière plastique (20) en la soumettant à l'action d'un milieu pouvant s'écouler, et dans lequel le système de façonnage (1) est disposé sur un support principal (6), sur lequel au moins un support de partie latérale (42) est déplacé par rapport à l'autre support de partie latérale (44) pour ouvrir et/ou fermer le moule de soufflage (2), dans lequel au moins un élément du système de façonnage (1) est alimenté au moyen d'un système d'alimentation (8), lequel présente au moins une première conduite de raccordement (82, 84, 86, 88, 92, 94), dans lequel au moins un tronçon d'au moins une conduite de raccordement (82, 84, 86, 88, 92, 94) est disposé de manière stationnaire par rapport au support principal (6) au moyen d'au moins un système de fixation (12) et dans lequel un tronçon de ladite conduite de raccordement (82, 84, 86, 88, 92, 94) est disposé sur un système du système de façonnage (1) de telle manière que ledit tronçon de la conduite de raccordement (82, 84, 86, 88, 92, 94) se déplace par rapport au système de fixation (14) et/ou au support principal lors d'un déplacement du support de partie latérale (42, 44) par rapport au support principal (6),
**caractérisé en ce que**
le dispositif (50) présente un organe de réglage (14), sur lequel au moins un tronçon de la conduite de raccordement (82, 84, 86, 88, 92, 94) est fixé, dans lequel ledit organe de réglage (14) se déplace également par rapport au support principal (6) lors de l'ouverture et/ou de la fermeture du moule de soufflage.
